# EUROPÄISCHE PATENTSCHRIFT

(11) **EP 0 987 420 B1**
(45) Veröffentlichungstag und Bekanntmachung des Hinweises auf die Patenterteilung: **08.12.2004**
(21) Anmeldenummer: 99117324.6
(22) Anmeldetag: 03.09.1999
(51) Int. Cl.: F02D 41/02, F02D 41/14

(54) **Verfahren zur Reduzierung der schädlichen Abgasbestandteile einer fremdgezündeten Brennkraftmaschine**
Method for reducing the harmful exhaust components of a spark ignition internal combustion engine
Procédé de réduction des composants d'échappement nocifs d'un moteur à combustion interne à allumage commandé

(30) Priorität: 15.09.1998 DE 19842060
(43) Veröffentlichungstag der Anmeldung: 22.03.2000
(73) Patentinhaber: ADAM OPEL AG, 65423 Rüsselsheim (DE)
(72) Erfinder: Blauth, Raimund, Dipl.-Ing., 66877 Ramstein (DE)
(74) Vertreter: Daniel, Ulrich W.P.

(56) Entgegenhaltungen:
- US-A- 5 556 604
- US-A- 5 577 383
- US-A- 5 715 676

## Beschreibung

Die Erfindung bezieht sich auf ein Verfahren zur Reduzierung der schädlichen Abgasbestandteile einer fremdgezündeten Brennkraftmaschine mit mindestens einem Startkatalysator und einem diesem nachgeordneten Hauptkatalysator im Abgasstrang sowie einem in Abhängigkeit vom Restsauerstoffgehalt des Abgases geregelten Kraftstoff-Zumeßsystem (Lambda-Regelung) für die Aufbereitung des Luft-Kraftstoff-Gemisches am Ansaugrohr sowie den weiteren Merkmalen des Oberbegriffes des Patentanspruches.

Mit DE 195 26 765 A1 ist ein Verfahren beschrieben, nach welchem nach dem Starten der Brennkraftmaschine das Abgas zunächst einen Startkatalysator und danach einen Adsorber durchströmt, um danach einem Hauptkatalysator zugeführt zu werden. Nachdem der Adsorber seine Adsorbtionskapazität erreicht hat, wird der Abgasstrom aus dem Startkatalysator direkt in den Hauptkatalysator geleitet. Erst nachdem der Hauptkatalysator seine Anspringtemperatur erreicht hat, wird zumindest ein Teil des Abgasstromes wieder durch den Adsorber geleitet, um diesen durch die heißen Abgase zu spülen bzw. zu entladen. Der Zeitpunkt für das Erreichen der Anspringtemperatur von Startkatalysator und Hauptkatalysator und das Verlieren der Adsorbtionsfähigkeit des Adsorbers wird mittels Temperatursensoren und/oder Abgassensoren in Verbindung mit einem Rechenmodell ermittelt.

Zur Realisierung eines solchen Verfahrens sind im Abgasstrang mehrere parallel geführte Abgasrohre sowie mehrere Abgasklappen zum wahlweisen Schalten dieser Abgasrohre erforderlich. Darüber hinaus ist neben dem Startkatalysator und dem Hauptkatalysator ein Adsorber zum Reduzieren der Schadstoffe bei einem Kaltstart vorgesehen. Eine nach diesem Verfahren arbeitende Abgasanlage ist somit sehr aufwendig und teuer. Sie erfordert darüber hinaus erheblichen Bauraum.

Der Erfindung liegt die Aufgabe zugrunde, ein Verfahren zu schaffen, mit dem die Abgasreinigung beim Kaltstart einer mit einem Vorkatalysator und einem diesem nachgeschalteten Hauptkatalysator ausgerüsteten fremdgezündeten Brennkraftmaschine verbessert werden kann.

Erfindungsgemäß wird diese Aufgabe gelöst mit den Merkmalen gemäß dem Patentanspruch.

Somit wird beim Kaltstart der Brennkraftmaschine vom Erreichen der Starttemperatur des Startkatalysators an bis zum Anspringen auch des Hauptkatalysators eine Schadstoffkonvertierung erreicht, die höher liegt als bei einer üblichen Lambda-Regelung zur Aufheizung des gesamten Katalysatorsystems mit Start- und Hauptkatalysator. Die Einregelung von Lambda auf einen Wert, der ein optimales Arbeiten allein des Startkatalysators gewährleistet, reduziert somit die Gesamtmenge der schädlichen Abgasbestandteile bei jedem Kaltstart.

Ein Ausführungsbeispiel des erfindungsgemäßen Verfahrens ist nachstehend anhand eines Flußdiagramms näher erläutert.

Nach dem Starten - Aktivität 1 - einer fremdgezündeten Brennkraftmaschine wird mit Aktivität 2 geprüft, ob eine Katalysator-Heizfunktion deshalb aktiviert werden muß, weil die Katalysatoranlage eine Temperatur unterhalb der Starttemperatur aufweist oder ob sogleich ein gesteuerter Motorbetrieb ohne eine Katalysator-Heizfunktion - Aktivität 11 - beginnen kann, da die Katalysator-Anlage bereits die Starttemperatur aufweist. In letzterem Falle wird mit normaler Lambda-Regelung, geprüft durch Aktivität 12, der Motorbetrieb mit Funktion B gemäß Aktivität 8 fortgesetzt. Wird mit Aktivität 2 erkannt, daß die Katalysatoranlage nicht ihre Starttemperatur aufweist, dann wird gemäß Aktivität 3 eine Katalysator-Heizfunktion aktiviert, und zwar so lange, bis gemäß Aktivität 4 erkannt wird, daß die Einschaltbedingungen für eine Lambda-Regelung vorliegen. Es wird nun gemäß Aktivität 5 geprüft, ob die Temperatur T am Startkatalysator größer ist als die Starttemperatur des Startkatalysators T SK1.

Wird bei Aktivität 5 erkannt, daß die Starttemperatur T SK1 des Startkatalysators noch nicht erreicht ist, wird die Katalysator-Heizfunktion gemäß Aktivität 3 fortgesetzt. Wird jedoch erkannt, daß die aktuelle Temperatur T des Startkatalysators größer ist als die Starttemperatur T SK1 des Startkatalysators, dann wird auf die Funktion A gemäß Aktivität 6 umgeschaltet. Diese Funktion A bedeutet gemäß der Erfindung, daß das Gemisch durch die Lambda-Regelung so eingestellt wird, daß der Startkatalysator allein seine optimale Schadstoffkonvertierung erbringt.

Diese Funktion A wird so lange aufrechterhalten, bis bei Aktivität 7 erkannt wird, daß auch die Starttemperatur T HK1 des Hauptkatalysators erreicht ist. Liegt am Hauptkatalysator eine Temperatur T größer als die Starttemperatur T HK1 an, dann wird auf die Funktion B - Aktivität 8 - umgeschaltet.

Die Funktion B umfaßt eine Gemischeinstellung Lambda, die nun optimiert ist auf das Gesamtabgasreinigungssystem mit Startkatalysator und Hauptkatalysator für eine optimale Schadstoffkonvertierung. Mit dieser nach Funktion B beschriebenen Einstellung wird die Brennkraftmaschine nun so lange betrieben, bis sie gemäß Aktivität 9 abgestellt wird. Mit dem Abstellen der Brennkraftmaschine wird das Verfahren bei Aktivität 10 beendet.

Der besondere Vorteil der Erfindung ist somit darin zu sehen, daß die schädlichen Abgasbestandteile einer fremdgezündeten Lambda-geregelten Brennkraftmaschine mit einem Startkatalysator und einem Hauptkatalysator während eines Kaltstartes gegenüber den bekannten Anordnungen von Vor- und Hauptkatalysatoren weiter reduziert werden können, indem vom Zeitpunkt des Anspringens des Startkatalysators bis zum Zeitpunkt des Anspringens des Hauptkatalysators die Konvertierungseigenschaften allein des Startkatalysators durch eine angepaßte Gemischeinstellung Lambda optimiert werden, ohne auf den noch nicht arbeitenden Hauptkatalysator Rücksicht zu nehmen. Erst wenn auch der Hauptkatalysator seine Anspringtemperatur erreicht hat, wird auch der Lambda-Wert des Gemisches auf den für die Gesamtanlage optimalen Wert eingeregelt.

Die weitere Reduzierung der schädlichen Abgasbestandteile gelingt dabei ohne Anwendung eines zusätzlichen Adsorbers und die für einen Adsorber erforderlichen schaltbaren Abgasklappen sowie des dafür zusätzlichen notwendigen Bauraumes.

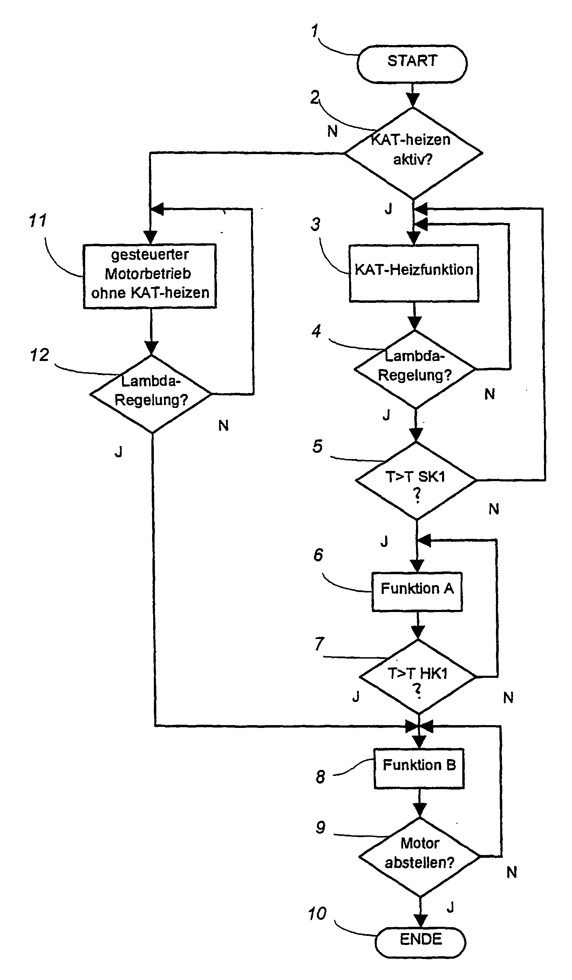

## Patentansprüche

1. Verfahren zur Reduzierung der schädlichen Abgasbestandteile einer fremdgezündeten Brennkraftmaschine mit mindestens einem Startkatalysator und einem diesem nachgeordneten Hauptkatalysator im Abgasstrang sowie einem in Abhängigkeit vom Restsauerstoffgehalt des Abgases geregelten Kraftstoff-Zumeßsystem für die Aufbereitung des Luft-Kraftstoff-Gemisches am Ansaugrohr,
- wobei nach dem Start der Brennkraftmaschine die Temperatur der Katalysatoranlage ermittelt und mit einer erforderlichen Anspringtemperatur verglichen wird,
- bei Erkennen einer Temperatur unterhalb der Anspringtemperatur der Katalysatoranlage eine Katalysator-Heizfunktion aktiviert wird und
- die Katalysator-Heizfunktion aufrechterhalten wird, bis die Einschaltbedingungen für eine Lambda-Regelung gegeben sind,
**gekennzeichnet durch** folgende weitere Schritte:
- Ermitteln der Temperatur des Startkatalysators und Vergleichen der ermittelten Temperatur mit seiner erforderlichen Starttemperatur T_SK1;
- bei Erkennen einer Temperatur des Startkatalysators oberhalb seiner Starttemperatur <T_SK1> Gemischeinstellung Lambda optimieren auf optimale Schadstoffkonvertierung **durch** Startkatalysator und bei Erkennen einer Temperatur des Startkatalysators unterhalb seiner Starttemperatur <T_SK1> die Katalysator-Heizfunktion fortsetzen;
- Ermitteln der Temperatur des Hauptkatalysators und vergleichen der ermittelten Temperatur mit seiner erforderlichen Starttemperatur T_HK1;
- bei Erkennen einer Temperatur des Hauptkatalysators oberhalb seiner Starttemperatur <T_HK1> wird die Gemischeinstellung Lambda optimiert auf das Gesamtabgasreinigungssystem mit Start- und Hauptkatalysator für optimale Schadstoffkonvertierung und bei Erkennen einer Temperatur des Hauptkatalysators unterhalb seiner Starttemperatur <T_HK1> wird der Betrieb mit Lambda-Optimum für eine optimale Schadstoffkonvertierung allein **durch** den Startkatalysator fortgesetzt.

## Claims

1. Method for reducing the noxious exhaust gas components of a spark-ignition internal combustion engine with at least one starting catalyst and a main catalyst arranged behind the latter in the exhaust train, and with a fuel proportioning system regulated as a function of the residual oxygen content of the exhaust gas for treatment of the fuel/air mixture at the intake pipe,
- wherein after starting the engine the temperature of the catalytic converter is determined and compared with a required light-off temperature,
- upon detection of a temperature below the light-off temperature of the catalytic converter a catalyst heating function is activated and
- the catalyst heating function is maintained until the switch-on conditions for lambda control are fulfilled,
**characterised by** the following further steps:
- determining the temperature of the starting catalyst and comparing the measured temperature with its required starting temperature T_SK1;
- upon detection of a temperature of the starting catalyst above its starting temperature <T_SK1, optimising the mixture adjustment lambda for optimum conversion of noxious components by starting catalyst, and upon detection of a temperature of the starting catalyst below its starting temperature <T_SK1, continuing the catalyst heating function;
- determining the temperature of the main catalyst and comparing the measured temperature with its required starting temperature T_HK1;
- upon detection of a temperature of the main catalyst above its starting temperature <T_HK1, the mixture adjustment lambda is optimised for the whole exhaust cleaning system with starting catalyst and main catalyst for optimum conversion of noxious components, and upon detection of a temperature of the main catalyst below its starting temperature <T_HK1, operation with optimum lambda for optimum conversion of noxious components by the starting catalyst alone is continued.

## Revendications

1. Procédé de réduction des composants d'échappement nocifs d'un moteur à combustion interne à allumage commandé avec au moins un catalyseur de démarrage et un catalyseur principal en aval de ce dernier dans le courant des gaz d'échappement, ainsi qu'un système régulé de dosage du carburant en fonction de la teneur résiduelle en oxygène des gaz d'échappement pour l'élaboration du mélange air-carburant dans la tubulure d'admission,
dans lequel la température du système de catalyseurs est déterminée après le lancement de la machine à combustion, et est comparée à une température de démarrage nécessaire,
quand une température est reconnue en dessous de la température de démarrage du système de catalyseurs, une fonction de chauffage des catalyseurs est activée et
la fonction de chauffage des catalyseurs est conservée jusqu'à ce que les conditions d'activation d'une régulation lambda soient vérifiées,
**caractérisé par** les autres étapes suivantes :
détermination de la température du catalyseur de démarrage et comparaison de la température déterminée à sa température de démarrage nécessaire T_SK1 ;
quand une température du catalyseur de démarrage est reconnue au-dessus de sa température de démarrage <T_SK1, optimisation du réglage du mélange lambda à la conversion optimale des composants nocifs par le catalyseur de démarrage et, quand une température du catalyseur de démarrage est reconnue en dessous de sa température de démarrage <T_SK1, poursuite de la fonction de chauffage du catalyseur ;
détermination de la température du catalyseur principal et comparaison de la température déterminée à sa température de démarrage nécessaire T_HK1 ;
quand une température du catalyseur principal est reconnue au-dessus de sa température de démarrage <T_HK1, le réglage du mélange lambda est optimisé en fonction de l'ensemble du système de dépollution des gaz d'échappement avec les catalyseurs de démarrage et principal pour une conversion optimale des composants nocifs et, quand une température du catalyseur principal est reconnue en dessous de sa température de démarrage <T_HK1, le fonctionnement est poursuivi avec un optimum de lambda pour une conversion optimale des composants nocifs par le seul catalyseur de démarrage.
